# EUROPEAN PATENT SPECIFICATION

(11) **EP 3 091 712 B1**
(45) Date of publication and mention of the grant of the patent: **30.09.2020**
(21) Application number: 14882363.6
(22) Date of filing: 10.12.2014
(51) Int. Cl.: H04L 29/08

(54) **SMART DEVICE FOR REALIZING MULTIPLE-DEVICE COLLABORATION AND WORKING METHOD FOR MULTIPLE-DEVICE COLLABORATION**
INTELLIGENTE VORRICHTUNG ZUR AUSFÜHRUNG EINER ZUSAMMENARBEIT MEHRERER VORRICHTUNGEN UND ARBEITSVERFAHREN ZUR ZUSAMMENARBEIT MEHRERER VORRICHTUNGEN
DISPOSITIF INTELLIGENT POUR RÉALISER UNE COLLABORATION ENTRE MULTIPLES DISPOSITIFS ET PROCÉDÉ DE TRAVAIL POUR UNE COLLABORATION ENTRE MULTIPLES DISPOSITIFS

(30) Priority: 12.02.2014 CN 201410048954
(43) Date of publication of application: 09.11.2016
(73) Proprietor: Institute Of Acoustics, Chinese Academy Of Science, Beijing 100190 (CN)
(72) Inventor: WANG, Jinlin, Beijing 100190 (CN); HUAN, Ziqiang, Beijing 100190 (CN); HU, Linlin, Beijing 100190 (CN); GUO, Zhichuan, Beijing 100190 (CN)
(74) Representative: Cornford, James Robert
(86) International application number: PCT/CN2014/093482
(87) International publication number: WO 2015/120736

(56) References cited:
- EP-A1- 1 841 180
- WO-A1-2013/055313
- WO-A1-2014/015730
- CN-A- 101 300 562
- CN-A- 102 624 870
- CN-A- 103 023 936
- US-A1- 2013 211 546

## Description

### FIELD OF THE INVENTION

The present invention relates to the field of communication, and more particularly to a smart device for realizing multiple-device collaboration and working method for multi-device collaboration.

### BACKGROUND OF THE INVENTION

With the development of terminal technologies, particularly rapid popularization of mobile terminals such as smartphones, tablets and smart TVs, multiple smart devices often coexist at home, and are connected in the same local area network in a wired or wireless manner. The fact that multiple devices at home are interconnected with each other makes the construction of a digital home a technical hotspot.

An important feature of a digital home is sharing, i.e., sharing of resources and services can be made possible across different smart devices in the digital home. At present, products for digital home that has already been introduced in the market are focused primarily on multi-screen interactions. The so-called "multi-screen interaction" refers to the sharing and interoperability of multimedia content across different terminal devices via a network connection. However, the multi-screen interaction function places much emphasis on the sharing of playback resources and display resources between devices in terms of content, and cannot make full use of various resource services of the smart devices within the digital home. Moreover, In terms of presentation, such function is mainly reflected on application level, and cannot improve user experience of all the applications.
US2013/0211546 discloses a cloud-aware smart device that facilitates automated configuration and integration of the device within an automation system.
EP1841180 discloses a system and method that allows service-to-device mapping by which services are mapped onto best-suited smart items.
WO2014/015730 discloses a device and service discovery method.
CN103023936 discloses a multi-hierarchy network system in a task executing method based on the network system.

### SUMMARY OF THE INVENTION

An objective of the present invention is to overcome the deficiency of being unable to sufficiently implementing resource sharing among smart devices in the same local area network, thereby providing a smart device capable of implementing multi-device collaboration and a method for multi-device collaboration.

In order to achieve the above objective, the present invention provides a smart device capable of implementing multi-device collaboration comprising an application execution engine; the application execution engine comprises a service abstraction & publication module, a service aggregation module and a task decomposition & service scheduler; wherein

the service abstraction & publication module abstracts, categorizes and quantifies service capabilities the smart device on which the service abstraction & publication module lies is able to provide externally to obtain service capability information on those service capabilities, and publishes the service capability information; the service aggregation module receives and saves service capability information published by other smart devices from a network; upon execution of an application on the smart device, the task decomposition & service scheduler decomposes tasks relevant to the application to be executed to obtain categories and number of services to be used for executing the application, and assigns service capabilities corresponding to the service capability information stored in the service aggregation module to services requiring execution with external collaboration; the service publication module publishes information on occupied service capabilities onto the network, and service aggregation modules of other smart devices update the information of the service capabilities the smart devices are able to provide externally stored in themselves according to the received information on the occupied service capabilities.

The present invention further provides a multi-device collaboration method implemented based on the smart device, the method comprises:
step 1) abstracting, categorizing and quantifying service capabilities a smart device newly joining a network is able to provide externally to obtain service capability information; wherein the abstraction comprises mapping the service capabilities of the smart device to standard operations; the categorization comprises dividing the service capabilities of the smart device into categories; and the quantification comprises numerically marking the service capabilities;
step 2) publishing the service capability information obtained from step 1) and an IP address of the smart device to other existing smart devices in the network;
step 3) after a smart device in the network listens service capability information published by other smart devices, parsing and saving the service capability information;
step 4) decomposing an application to be executed into a series of services when a certain smart device executes the application, and then scheduling corresponding service capabilities from the service capability information stored by the smart device according to requirements of those services; and
step 5) sending, by a smart device occupying the service capabilities, service capability occupation information to other smart devices, and updating, by said other smart devices, the service capability information stored in themselves.

In the above technical solution, in said step 2), the service capability information and the IP address of the smart device are sent to other existing smart devices in the network in the form of multicast or broadcast.

In the above technical solution, said step 2) comprises: sending the service capability information and the IP address of the smart device twice in the form of multicast when the smart device joins the network, and then sending a broadcast message comprising the service capability information and the IP address of the smart device every 60 seconds.

In the above technical solution, in said step 1), quantifying the service capabilities comprises:
quantifying a download service as: the maximum number of download tasks that can be performed in parallel, and the maximum bandwidth that can be utilized;
quantifying a storage service as: the size of a storage space;
quantifying a playback service as: the maximum number of playback tasks that can be performed in parallel, and supported types of playback formats;
quantifying a decoding service as: the number of decoders, and supported types of decoding;
quantifying a display service as: whether there is a display interface, and the resolution of the display interface.

Advantages of the present invention are in that
1. the present invention, by way of multi-device collaboration, enables an application execution engine of an individual smart device to utilize service capabilities of multiple devices within a local area network, thereby expanding the service capabilities of the application execution engine in a manner transparent to a user, and improving user experience;
2. The expansion of the service capabilities at the level of the application execution engine may benefit all applications running on the smart device.

### BRIEF DESCRIPTION OF THE DRAWINGS

Fig. 1 is a schematic diagram of a working scenario of a smart device capable of implementing multi-device collaboration according to the present invention;
Fig. 2 is a schematic diagram of the location of an application execution engine in the smart device capable of implementing multi-device collaboration according to the present invention;
Fig. 3 is a workflow diagram of a method for multi-device collaboration according to the present invention.

### DETAILED DESCRIPTION OF THE INVENTION

The present invention will be further described in conjunction with the accompanying drawings.

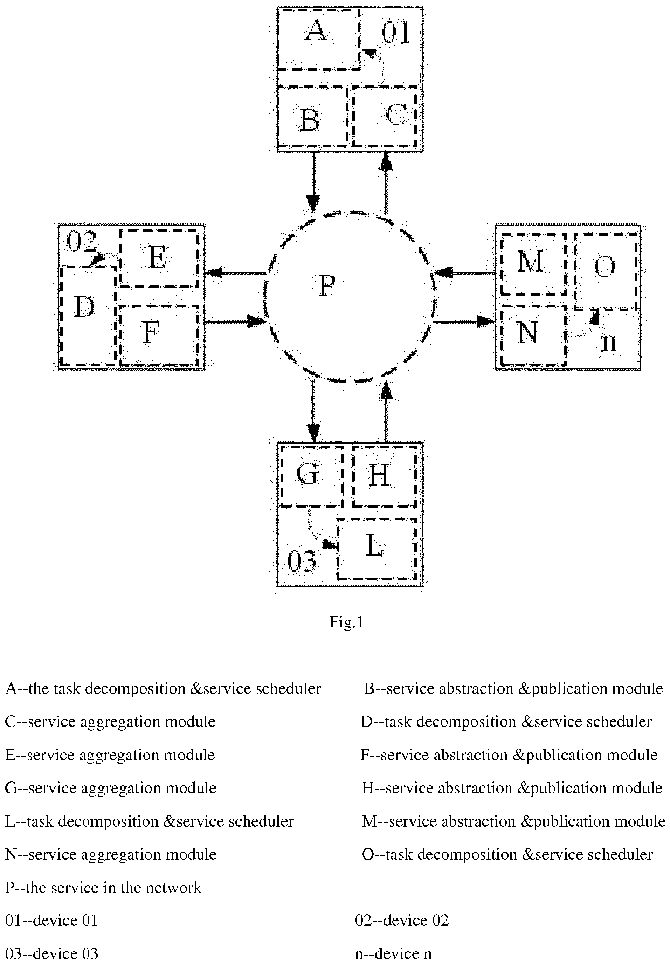

In the scenario illustrated in Fig. 1, a plurality of smart devices are connected in a local area network, which may be any one of a smart TV, a smartphone, a personal computer, a tablet, or the like. Those smart devices may utilize service capabilities provided by other smart devices in the local area network to run applications on the smart devices themselves.

Referring to Fig. 1, the smart device of the present invention comprises an application execution engine comprising a service abstraction & publication module, a service aggregation module, and a task decomposition & service scheduler. In some embodiments, the service abstraction & publication module abstracts, categorizes and quantifies service capabilities the smart device on which the service abstraction & publication module lies is able to provide externally to obtain information on those service capabilities, and publishes the information; the service aggregation module receives and saves service capability information published by other smart devices from a network; upon execution of an application on the smart device, the task decomposition & service scheduler decomposes tasks relevant to the application to be executed to obtain categories and number of services to be used for executing the application, and assigns service capabilities corresponding to the service capability information stored in the service aggregation module to services requiring execution with external collaboration; the service publication module publishes information on occupied service capabilities onto the network, and service aggregation modules of other smart devices update the information of the service capabilities the smart devices are able to provide externally stored in themselves according to the received information on the occupied service capabilities.

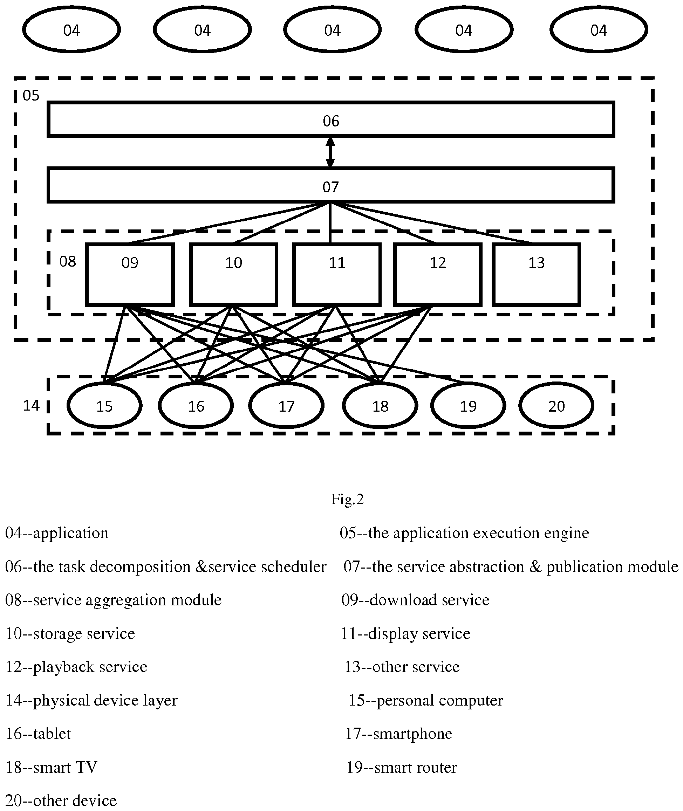

The location of the application execution engine in the smart device is depicted in Fig. 2. As can be seen from the figure, the application execution engine is located above a physical device layer and below various specific applications of the smart device. The application execution engine performs task decomposition on a certain application to be executed, and then schedules corresponding service capabilities according to the result of the task decomposition. Those service capabilities may be provided locally by the smart device, or they may also be provided by other smart devices in the network.

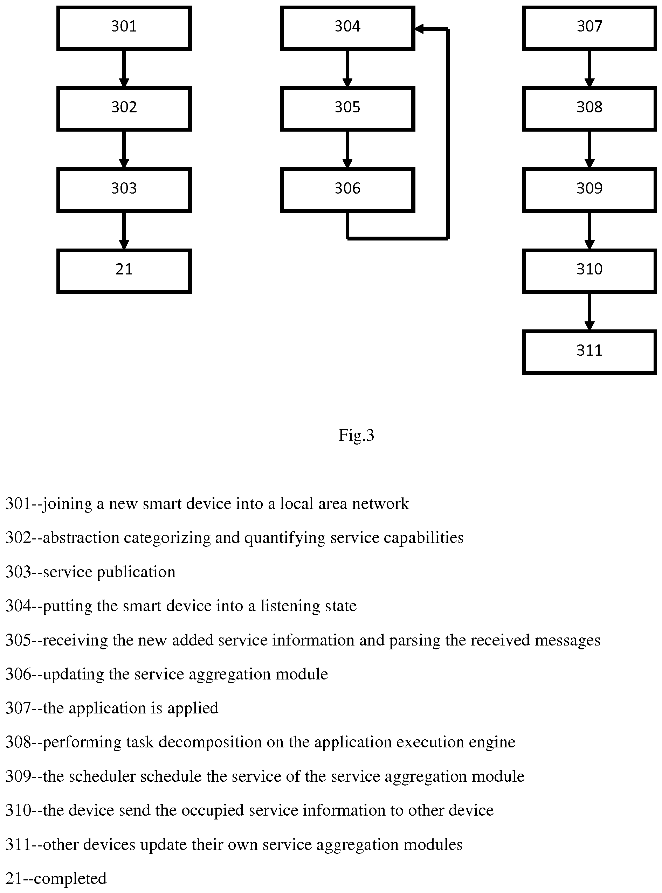

Fig. 3 is a workflow diagram of multi-device collaboration implemented by the smart device of the present invention, comprising:

Step 301: joining a new smart device into a local area network to access a home network in a wired or wireless manner according to the type of the device; for example, a smartphone, a tablet or a notebook accesses the home network in a wireless manner (wifi) in most cases, while devices such as a desktop computer, a smart TV and a smart router typically make access in a wired manner.

Step 302: abstracting, categorizing and quantifying service capabilities to obtain service capability information for describing the service capabilities.

The abstraction of service capabilities is a standard operation of the smart device on its capability in providing services externally, and is an agreement between a service provider and a service user. Taking a download service as an example, the following standard operations may be agreed upon:
the service user triggers:
action: startDownload; parameter: url
action: stopDownload; parameter: none
the service provider triggers:
action: onDownloadFinished; parameter: time
action: onDownloadFailed; parameter: reason

According to the above agreement, the smart device carries out a mapping from its own service capabilities to the standard operations, so as to abstract the service capabilities into standard interfaces.

The categorization of service capabilities is to divide the service capabilities of the smart device into categories, such as, for example, a download service, a storage service, a playback service, a decoding service, a display service, and the like.

The quantification of service capabilities is to numerically mark various service capabilities. Taking the service capabilities of a certain smart device as an example, three services may be provided externally: a download service, a display service and a playback service, which can be quantified as follows:
the download service: supporting a maximum of 5 parallel download tasks, with a maximum download rate of 1 Mb/s
the display service: number (1), size (5 inches), resolution (1280x720)
the playback service: number of parallel tasks (2), supported types (mp3/mp4/avi).

Due to differences among service capabilities that can be provided by different smart devices, the quantified values of the service capabilities of each smart device may vary, respectively.

Step 303: publishing the service capability information and an IP address of the smart device, which means that the newly joined smart device sends its own service capability information and the IP address to other devices in the local area network in the form of multicast or broadcast. A recommended approach is to send them twice in the form of multicast when joining the network, and then send a broadcast message every 60 seconds, thereby avoiding a service from being undetected due to packet loss. The message being sent are quantified representative structures of the service capabilities in Step 302, which may be expressed here in JSON (JavaScript Object Notation) format:

```
    {
    "device_name": "smart phone",
    "device_ip": "192.168.10.12",
    "download_service": { "max_tasks": 5, "max_speed": "1Mb/s", "free_tasks": 5},
    "show_service": { "max_number": 1,"free_number":1, "size": 5,"resolution":
    "1280x720"}
    "play_service":{"max_tasks":2,"support_types":["mp3", "mp4", "avi"], "free_tasks":
    2}}
```

Step 304: putting the smart device into a listening state, in which smart devices having already joined the local area network will listen to multicast and broadcast messages at all time.

Step 305: parsing the received messages. Taking the service message of the smartphone received in Step 302 as an example, the information expressed in JSON format in Step 303 will be received. By parsing, parameters attached to the download service, the display service, the playback service and various other services may be restored.

Step 306: updating the service capability information stored in the service aggregation module of the smart device with the service information parsed in Step 305.

In the service aggregation module, current information of all the service capabilities in the local area network is stored in the form of a database or a file, and here, a file in JSON format again is taken as an example:

The original all_services.json file is as follows:

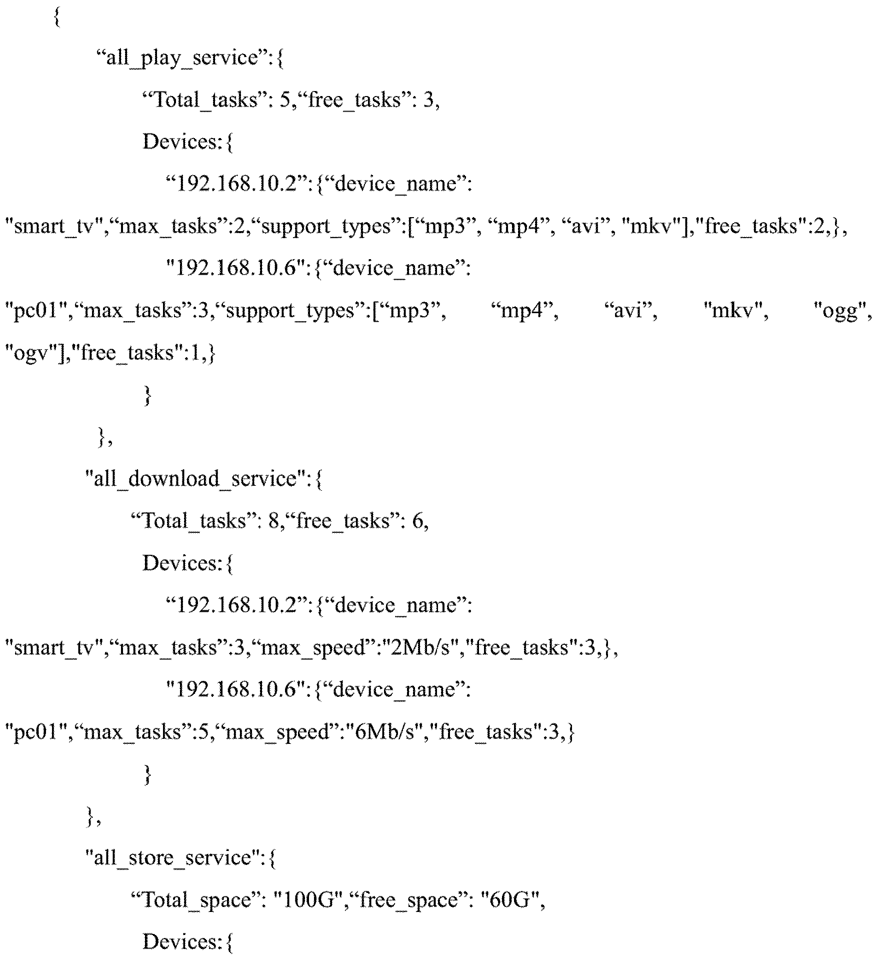

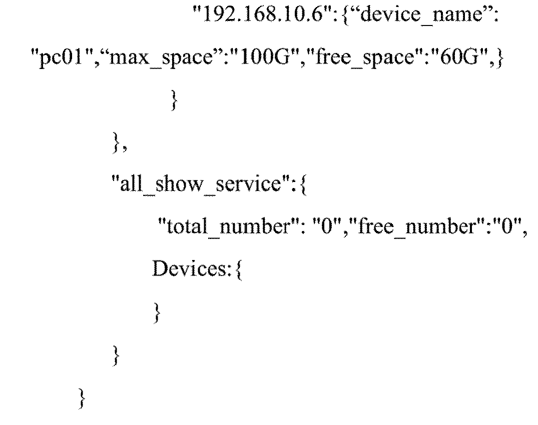

The updated all_services.json file upon receiving the service capability message published by the newly joined device is as follows:

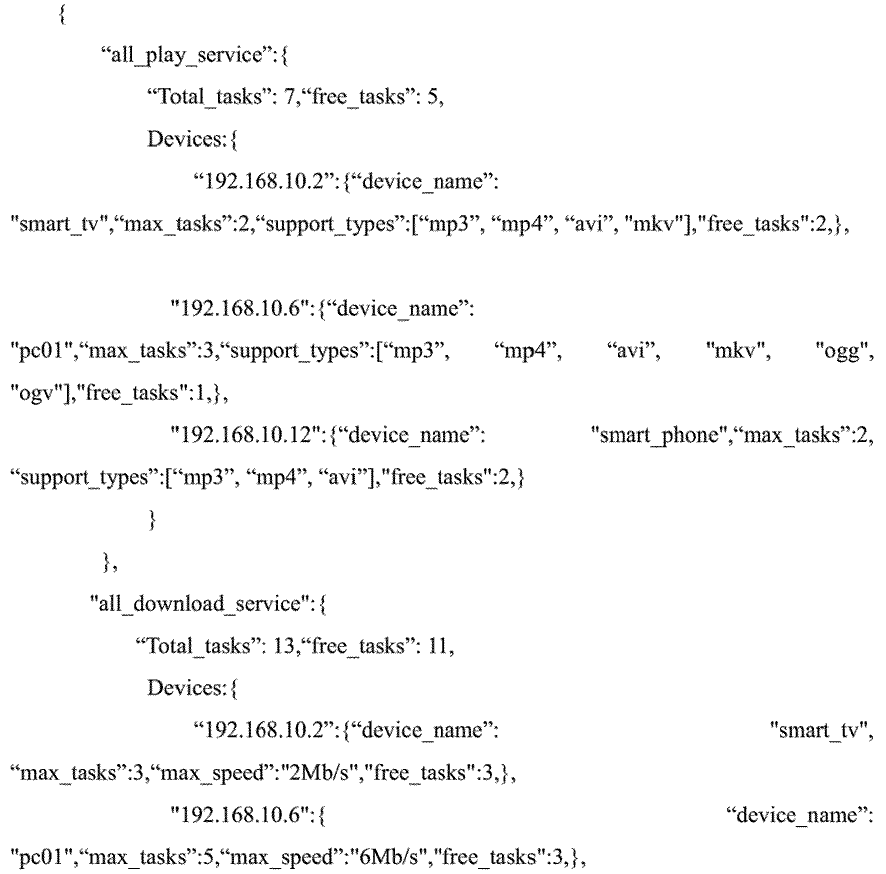

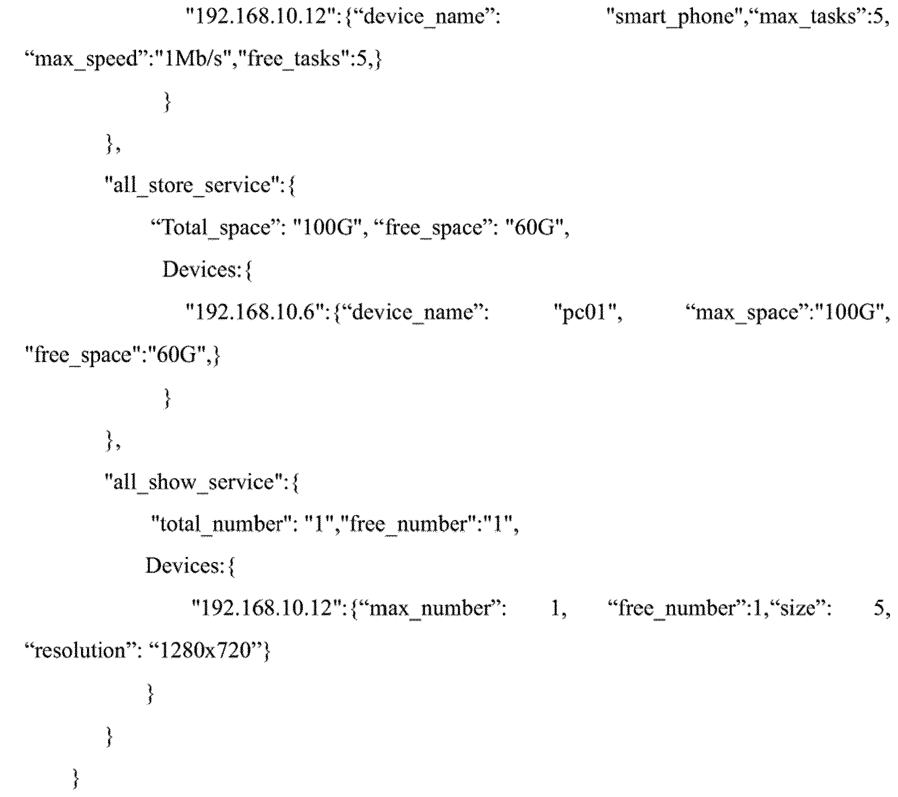

Steps 307∼308: when the application execution engine is applied to execute an application, performing task decomposition on the application to decompose it into a series of services. For example, a playback application of a download type will use the following services:
a download service, a storage service and a playback service.

Step 309: scheduling, by the scheduler, corresponding service capabilities from the service capability information stored in the service aggregation module according to requirements of the services obtained by the above application decomposition. In some embodiment, information such as the categories of the service capabilities, the quantization values of the service capabilities, and the IP address of the smart device are required when scheduling the service capabilities.

The scheduler, when scheduling the service capabilities, needs to interact with the smart device that provides the service capabilities. The specific ways of the interaction may vary according to the category of the services. For example, if an iPhone utilizes a playback capability of an iPad, the iPhone will inform the iPad of the position and information of a song to be played, and then instruct the iPad to play the song; if the iPhone utilizes a storage service of the iPad, the iPhone will deposit a file downloaded by itself onto a storage space of the iPad; and if the iPhone utilizes a decoding capability of the iPad, the iPhone will send a video to be decoded to the iPad, and then the iPad, after decoding the video, will transmit the decoded data back to the iPhone for display.

Steps 310∼311: sending, by a smart device occupying the service capabilities, service capability occupation information to other smart devices to cause all the smart devices to update their own service aggregation modules.

Those skilled in the art may further recognize that units and algorithm steps of each example described in combination with the embodiments disclosed herein can be implemented in electronic hardware, computer software or combination thereof. In order to clearly illustrate the interchangeability of hardware and software, the above illustration has generally described the constitution and steps of each example according to their functions. Whether those functions are executed in hardware or software depends on the particular application and the design constraint of the technical solution. For each particular application, those skilled in the art may use different methods to implement the described functions; however, such implementation should not be considered as exceeding the scope of the invention.

The steps of the methods or algorithms described in combination with the embodiments disclosed herein may be implemented by means of hardware, software modules executed by a processor, or combination thereof. The software modules may be placed in a random access memory (RAM), internal memory, read-only memory (ROM), electrically programmable ROM, electrically erasable programmable ROM, register, hard disk, removable disk, CD-ROM or any other forms of storage media well known in the art.

Finally, it should be noted that the aforementioned embodiments are only used for illustrating, rather than limiting the technical solution of the present invention. Although the present invention has been described in detail with reference to the embodiments , the scope of protection is established by the appended set of claims.

## Claims

1. A smart device for realizing multiple-device collaboration, comprising an application execution engine; the application execution engine comprising a service abstraction & publication module, a service aggregation module and a task decomposition & service scheduler; wherein:
the service abstraction & publication module abstracts, categorizes and quantifies service capabilities the smart device on which the service abstraction & publication module lies, is able to provide externally to obtain service capability information on those service capabilities, and publishes the service capability information;
the service aggregation module receives and saves service capability information published by other smart devices from a network;
upon execution of an application on the smart device, the task decomposition & service scheduler decomposes tasks relevant to the application to be executed to obtain categories and number of services to be used for executing the application, and assigns service capabilities corresponding to the service capability information stored in the service aggregation module to services requiring execution with external collaboration; and
the service publication module publishes information on occupied service capabilities onto the network, enabling service aggregation modules of other smart devices to update the information stored thereon, regarding the service capabilities the smart device is able to provide externally, according to the received information on the occupied service capabilities.

2. A multi-device collaboration method, comprising:
step 1) abstracting, categorizing and quantifying service capabilities a smart device newly joining a network is able to provide externally to obtain service capability information; wherein the abstraction comprises mapping the service capabilities of the smart device to standard operations; the categorization comprises dividing the service capabilities of the smart device into categories; and the quantification comprises numerically marking the service capabilities;
step 2) publishing the service capability information obtained from step 1) and an IP address of the smart device to other existing smart devices in the network;
step 3) after a smart device in the network listens service capability information published by other smart devices, parsing and saving the service capability information;
step 4) decomposing an application to be executed into a series of services when a certain smart device executes the application, and then scheduling corresponding service capabilities from the service capability information stored by the smart device according to requirements of those services; and
step 5) sending, by a smart device occupying the service capabilities, service capability occupation information to other smart devices, and updating, by said other smart devices, the service capability information stored in themselves.

3. The multi-device collaboration method according to claim 2, wherein, in said step 2), the service capability information and the IP address of the smart device are sent to other existing smart devices in the network in the form of multicast or broadcast.

4. The multi-device collaboration method according to claim 3, wherein, said step 2) comprises:
sending the service capability information and the IP address of the smart device twice in the form of multicast when the smart device joins the network, and then sending a broadcast message comprising the service capability information and the IP address of the smart device every 60 seconds.

5. The multi-device collaboration method according to claim 2, wherein, in said step 1), quantifying the service capabilities comprises:
quantifying a download service as: the maximum number of download tasks that can be performed in parallel, and the maximum bandwidth that can be utilized;
quantifying a storage service as: the size of a storage space;
quantifying a playback service as: the maximum number of playback tasks that can be performed in parallel, and supported types of playback formats;
quantifying a decoding service as: the number of decoders, and supported types of decoding;
quantifying a display service as: whether there is a display interface, and the resolution of the display interface.

## Patentansprüche

1. Intelligente Vorrichtung zur Ausführung einer Zusammenarbeit mehrerer Vorrichtungen, die eine Ausführungsmaschine für Anwendungen umfasst; wobei die Ausführungsmaschine für Anwendungen ein Modul für Service-Abstraktion & Veröffentlichung, ein Modul für Service-Aggregation und ein Steuerprogramm für Aufgabenzerlegung und Service umfasst; wobei:
Das Modul für Service-Abstraktion & Veröffentlichung Service-Möglichkeiten der intelligenten Vorrichtung abstrahiert, kategorisiert und quantifiziert, auf dem das Modul für Service-Abstraktion & Veröffentlichung liegt,
fähig ist, extern vorzusehen, Information für Service-Möglichkeit bereitzustellen und die Information für Service-Möglichkeit zu veröffentlichen;
das Modul für Service-Aggregation Information für Service-Möglichkeit empfängt und speichert, die von anderen intelligenten Vorrichtungen aus einem Netzwerk veröffentlicht wurde;
nach Ausführung einer Anwendung auf der intelligenten Vorrichtung, zerlegt das Steuerprogramm für Aufgabenzerlegung & Service Aufgaben, die für die auszuführende Anwendung relevant sind, um Kategorien und Zahl von Services zu erhalten, die zur Ausführung der Anwendung zu verwenden sind, und weist Service-Möglichkeiten, die der Information für Service-Möglichkeiten entsprechen, die im Modul für Service-Aggregation gespeichert sind, Services zu, die Ausführung mit externen Zusammenarbeit erfordern; und
das Modul für Service-Veröffentlichung veröffentlicht Information über belegte Service-Möglichkeiten auf dem Netzwerk, welches Modulen für Service-Aggregation von anderen intelligenten Vorrichtungen ermöglicht, die darauf gespeicherte Information hinsichtlich der Service-Möglichkeiten, welche die intelligente Vorrichtung extern bereitstellen kann, gemäß der empfangenen Information über die belegten Service-Möglichkeiten zu aktualisieren.

2. Verfahren zur Zusammenarbeit mehrerer Vorrichtungen, umfassend:
Schritt 1) Abstrahieren, Kategorisieren und Quantifizieren von Service-Möglichkeiten einer intelligenten Vorrichtung, die neu zu einem Netzwerk stößt, ist fähig extern vorzusehen, Information für Service-Möglichkeiten zu erlangen; wobei die Abstraktion Mapping der Service-Möglichkeiten der intelligenten Vorrichtung nach Standard-Operationen umfasst; die Kategorisierung umfasst das Teilen der Service-Möglichkeiten der intelligenten Vorrichtung in Kategorien; und die Quantifizierung umfasst numerische Markierung der Service-Möglichkeiten;
Schritt 2) Veröffentlichen der Information für Service-Möglichkeit, die aus Schritt 1) erlangt wurde und einer IP-Adresse der intelligenten Vorrichtung an andere im Netzwerk vorhandene intelligente Vorrichtungen;
Schritt 3) nach dem eine intelligente Vorrichtung im Netzwerks Information für Service-Möglichkeit hört, die von anderen intelligenten Vorrichtungen veröffentlicht wurde, Parsen und Speichern der Information für Service-Möglichkeit;
Schritt 4) Zerlegen einer auszuführenden Anwendung in eine Reihe von Services, wenn eine gewisse intelligente Vorrichtung die Anwendung ausführt, und danach Planung entsprechender Service-Möglichkeiten aus der Information für Service-Möglichkeit, die von der intelligenten Vorrichtung gemäß Anforderungen jener Services gespeichert wurde; und
Schritt 5) Senden, durch eine intelligente Vorrichtung, welche die Service-Möglichkeiten belegt, Belegungsinformation für Service-Möglichkeit an andere intelligente Vorrichtungen und Aktualisieren, durch die anderen intelligenten Vorrichtungen, die in ihnen selbst gespeicherte Information für Service-Möglichkeit.

3. Verfahren zur Zusammenarbeit mehrerer Vorrichtungen nach Anspruch 2, wobei bei Schritt 2) die Information für Service-Möglichkeit und die IP-Adresse der intelligenten Vorrichtung an andere im Netzwerk vorhandene intelligente Vorrichtungen in Form von Multicast oder Broadcast.

4. Verfahren zur Zusammenarbeit mehrerer Vorrichtungen nach Anspruch 3, wobei der Schritt 2) umfasst:
Senden der Information für Service-Möglichkeit und der IP-Adresse der intelligenten Vorrichtung zweimal in Form von Multicast, wenn die intelligente Vorrichtung dem Netzwerk beitritt und danach Senden einer Broadcast-Nachricht, welche die Information für Service-Möglichkeit und die IP-Adresse der intelligenten Vorrichtung umfasst, alle 60 Sekunden.

5. Verfahren zur Zusammenarbeit mehrerer Vorrichtungen nach Anspruch 2, wobei der Schritt 1) Quantifizieren der Service-Möglichkeiten umfasst:
Quantifizieren eines Download-Service wie: die maximale Zahl von Download-Aufgaben, die parallel durchgeführt werden können, und der maximalen Bandbreite, die benutzt werden kann;
Quantifizieren eines Speicher-Service wie: die Größe eines Speicherplatzes;
Quantifizieren eines Wiedergabe-Service wie: die maximale Zahl von Wiedergabeaufgaben, die parallel durchgeführt werden können und der unterstützten Typen von Wiedergabeformaten;
Quantifizieren eines Dekodierungs-Service wie: der Zahl von Decodern und der unterstützten Arten von Decodierung;
Quantifizieren eines Anzeige-Service wie: ob es eine Anzeigeschnittstelle gibt, und der Auflösung der Anzeigeschnittstelle.

## Revendications

1. Dispositif intelligent pour réaliser une collaboration multi-dispositifs, comprenant un moteur d'exécution d'application ; le moteur d'exécution d'application comprenant un module d'analyse et de publication de services, un module d'agrégation de services et un planificateur de décomposition de tâches et de services ; dans lequel :
le module d'analyse et de publication de service analyse, catégorise et quantifie les capacités de services que le dispositif intelligent sur lequel se trouve le module d'abstraction et de publication de service peut fournir en externe pour obtenir des informations de capacités de services sur ces mêmes capacités de service, et publie les informations de capacité de service ;
le module d'agrégation de services reçoit et enregistre les informations de capacités de services publiées par d'autres dispositifs intelligents à partir d'un réseau ;
lors de l'exécution d'une application sur le dispositif intelligent, le planificateur de décomposition de tâches et de services décompose les tâches pertinentes pour l'application à exécuter pour obtenir des catégories et le nombre de services à utiliser pour exécuter l'application, et attribue des capacités de services correspondantes aux informations de capacités de services stockées dans le module d'agrégation de services vers des services requérant une exécution avec une collaboration externe ; et
le module de publication de service publie des informations sur les capacités de services occupées sur le réseau, permettant ainsi aux modules d'agrégation de service d'autres appareils intelligents de mettre à jour les informations qu'ils stockent concernant les capacités de service que les appareils intelligents peuvent fournir en externe en fonction des informations reçues sur les capacités de service occupées.

2. Procédé de collaboration multi-dispositifs :
étape 1) extraction, catégorisation et quantification des capacités de services qu'un dispositif intelligent ayant récemment rejoint un réseau peut fournir en externe pour obtenir des informations de capacité de service ; dans lequel l'analyse comprend le mappage des capacités de services du dispositif intelligent pour des opérations standard ; la catégorisation comprend la répartition des capacités de services du dispositif intelligent en catégories ; et la quantification comprend le marquage numérique des capacités de services ;
étape 2) publication des informations de capacités de services obtenues dans l'étape 1) et d'une adresse IP du dispositif intelligent sur d'autres dispositifs intelligents existants dans le réseau ;
étape 3) après l'écoute des informations de capacités de services publiées par d'autres dispositifs intelligents par un dispositif intelligent du réseau, analyse syntaxique et sauvegarde des informations de capacités de services ;
étape 4) décomposition d'une application à exécuter en une série de services lorsqu'un certain dispositif intelligent exécute l'application, puis planification des capacités de services correspondantes à partir des informations de capacités de services stockées par le dispositif intelligent en fonction des exigences de ces services ; et
étape 5) envoi, par un dispositif intelligent occupant les capacités de services, d'informations d'occupation de capacités de services à d'autres dispositifs intelligents, et mise à jour, par lesdits autres dispositifs intelligents, des informations de capacités de services qu'ils stockent en interne.

3. Procédé de collaboration multi-dispositifs selon la revendication 2, dans lequel, à ladite étape 2), les informations de capacités de services et l'adresse IP du dispositif intelligent sont envoyées à d'autres dispositifs intelligents existants dans le réseau sous forme de multidiffusion ou de diffusion.

4. Procédé de collaboration multi-dispositifs selon la revendication 3, dans lequel ladite étape 2) comprend :
l'envoi des informations de capacités de services et de l'adresse IP du dispositif intelligent deux fois sous forme de multidiffusion lorsque le dispositif intelligent rejoint le réseau, puis l'envoi d'un message de diffusion comprenant les informations de capacités de services et l'adresse IP du dispositif intelligent toutes les 60 secondes.

5. Procédé de collaboration multi-dispositifs selon la revendication 2, dans lequel, à ladite étape 1), la quantification des capacités de services comprend :
la quantification d'un service de téléchargement comme suit : nombre maximal de tâches de téléchargement pouvant être effectuées en parallèle et bande passante maximale pouvant être utilisée ;
la quantification d'un service de stockage comme suit : taille d'un espace de stockage ;
la quantification d'un service de lecture comme suit : nombre maximum de tâches de lecture pouvant être effectuées en parallèle et types de formats de lecture pris en charge ;
la quantification d'un service de décodage comme suit : nombre de décodeurs et types de décodage pris en charge ;
la quantification d'un service d'affichage comme suit : existence potentielle d'une interface d'affichage, et résolution de l'interface d'affichage.
